# EUROPÄISCHE PATENTSCHRIFT

(11) **EP 1 255 394 B1**
(45) Veröffentlichungstag und Bekanntmachung des Hinweises auf die Patenterteilung: **28.09.2005**
(21) Anmeldenummer: 02100396.7
(22) Anmeldetag: 23.04.2002
(51) Int. Cl.: G06F 1/00, H04L 29/06

(54) **Just-in-Time Authentifizierung von Benutzern eines digitalen Hausnetzwerks**
Just-in-time user authentication in a digital home network
Authentification en flux tendus des utilisateurs dans des réseaux domotiques numériques

(30) Priorität: 26.04.2001 DE 10120364
(43) Veröffentlichungstag der Anmeldung: 06.11.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Baumeister, Markus c/o Philips Corporate, 52066 Aachen (DE); Hauptmann, Steffen, Dr. c/o Philips Corporate, 52066 Aachen (DE); Klabunde, Karin c/o Philips Corporate, 52066 Aachen (DE)
(74) Vertreter: Volmer, Georg

(56) Entgegenhaltungen:
- EP-A- 1 089 516
- WO-A-01/11450
- US-A- 5 553 239

## Beschreibung

Die Erfindung bezieht sich auf ein Netzwerk mit Netzwerkknoten und einem auf allen Netzwerkknoten verteiltem Softwaresystem.

Ein solches Netzwerk ist aus Ralf Steinmetz (Hrsg.): "Kommunikation in verteilten Systemen (KiVS)", 11. ITG/GI-Fachtagung, Darmstadt, 2.-5. März 1999; Stephan Abramowski, Heribert Baldus, Tobias Helbig: "Digitale Netze in Wohnungen - Unterhaltungselektronik im Umbruch", Seiten 340 bis 351, bekannt. Es werden in dieser Veröffentlichung Anforderungen für ein zukünftiges Netzwerk im Heimbereich mit der darin verwendeten Software beschrieben.

Digitale Netzwerke im Heimbereich ermöglichen eine Kommunikation und Zusammenarbeit zwischen unabhängigen Geräten. Aufgrund eines verteilten Betriebssystems können Objekte eines Hausnetzwerks ohne Wissen über die zugrundeliegende Kommunikationstechnologie miteinander interagieren.

Innerhalb des digitalen Hausnetzwerks erfordern einige Objekte Schutz vor Zugriffen unerlaubter oder unerwünschter Benutzer. Zugriffsgeschützte Objekte des Systems können z.B. Geräte, Daten, Inhalte wie Filme oder Anwendungen sein. Zusätzlich ist der Benutzer in der Lage, das System, welches aus Soft- und Hardware des Hausnetzwerks gebildet wird, nach seinen Wünschen und Bedürfnissen entsprechend zu personalisieren. Die Personalisierung kann bedeuteten, dass nach der Authentifizierung des Benutzers das System eine für den Benutzer typische Grundeinstellung bestimmter Geräte und Anwendungen wählt, eine Liste der von den Benutzer bevorzugter Anwendungen auf dem Bildschirm erscheint oder das Verhalten des System bei Ressourcenkonfikten (Geräte, Softwareprogramme, Daten etc.) benutzerabhängig ist.

Sowohl für die Zusicherung von Zugriffsrechten als auch für die Personalisierung ist es notwendig, die aktuell aktiven Benutzer des Systems zu identifizieren und ihre Identität zu verifizieren (Authentifizierung).

Zur Zusicherung von Eigenschaften wie Personalisierung oder Zugriffsrechten brauchen digitale Hausnetzwerke Verfahren, die zwischen den verschiedenen Benutzern des Hausnetzwerks unterscheiden können und deren Identität verifizieren. Bei den verfügbaren Authentifizierungsmethoden (z.B. Benutzername und Kennwort, Sprechen einer vorgegebenen Wortfolge), kann das für den Benutzer sehr aufwendig, zeitintensiv bzw. umständlich sein. Somit muss die Anzahl der erforderlichen Authentifizierungen auf ein Minimum beschränkt werden. Gleichzeitig soll ein Missbrauch einer vorliegenden Authentifizierung durch Dritte (z.B. bei Verlassen des Raumes) möglichst verhindert werden.

Existierende Verfahren zur Authentifizierung innerhalb eines Netzwerks erfordern die Authentifizierung zu Beginn der Systemnutzung von den Benutzern des Netzwerks. Die Gültigkeit der Authentifizierung bleibt bis zum Ende der Systemnutzung eines Benutzers bestehen. Ein weiteres bereits bekanntes Verfahren ist eine individuelle Authentifizierung. Hierbei wird die Authentifizierung vor jedem Zugriff des Benutzers auf ein zugriffgeschütztes Objekt verlangt. Bei diesem Verfahren verliert die Authentifizierung ihre Gültigkeit, wenn der Benutzer seinen Zugriff auf ein zugriffgeschütztes Objekt beendet hat. Ein Einsatz existierender Verfahren zur Authentifizierung von Benutzern innerhalb des Hausnetzwerks ist nicht bekannt.

In dem Dokument WO 01/11450 A1 wird ein System zum Schutz von Informationen auf einem oder mehreren Informationsserver beschrieben. Das System arbeitet mit einer so genannten "Trust-Level" Authentifizierung. Dabei wird jeder Information ein bestimmter Trust-Level zugewiesen, der auch mit einem inhaltlicher Zusammenhang bzw. Softwareumgebung (Kontext) des Systems (z.B. nur Zugriff innerhalb eines Firmennetzes) in Verbindung gebracht werden kann. Ein Systembenutzer bekommt ebenfalls einen Trust-Level zugewiesen. Der dem Benutzer zugewiesenen Trust-Level dient zur Kontrolle des Zugriffs auf Informationen im System. Der Benutzer kann auf Informationen des Systems zugreifen, für die der Trust-Level des Benutzers ausreichend ist ohne die Notwendigkeit sich bei jedem Zugriff authentifizieren zu müssen. Das beschriebene System arbeitet nicht mit auf einen bestimmten Benutzer bezogenen Zugriffsrechten, so dass eine personenbezogene Authentifizierung nicht möglich ist.

Der Erfindung liegt die Aufgabe zugrunde, ein Netzwerk mit einem Softwaresystem zu schaffen, in welchem der Authentifizierungsaufwand für den Benutzer eines digitalen Netzwerks minimiert wird und das gleichzeitig ein hohes Maß an Sicherheit bietet.

Die Aufgabe wird durch ein Netzwerk der eingangs genannten Art dadurch gelöst, dass eine als Timer bezeichnete Softwarekomponente nach der Authentifizierung zur Zeiterfassung der Systemnutzung des Benutzers gestartet wird, und der Timer bei jeder neuen Interaktion des Benutzers mit dem System zurückgesetzt wird. Die Gültigkeit der Authentifizierung für die Aktionen an der Benutzerschnittstelle erlischt nach Ablauf einer Laufzeit des Timers. Die durch den Timer gemessene Zeit zwischen den Zugriffen begrenzt die Gültigkeit der Authentifizierung vorteilhaft, da dadurch die Sicherheit des zugriffgeschützten Objektes erhöht wird.

Andere Weiterbildungen und Ausgestaltungen der Erfindung sind in den Unteransprüchen angegeben. Das dieser Erfindung zugrundeliegende Verfahren verlangt die Authentifizierung des Benutzers beim ersten Zugriff auf ein geschütztes Objekt und bleibt von diesem Zeitpunkt an für eine definierte Zeitdauer gültig. Die definierte Zeitdauer kann während der Initialisierung des Systems bestimmt werden oder zu einem späteren Zeitpunkt durch Administratoren des Systems geändert werden. Die Dauer des Zeitintervalls und somit die Gültigkeitsdauer der Authentifizierung ist abhängig von den zur Verfügung stehenden Mechanismen zur Authentifizierung. Unter Kontext wird ein jeweiliger inhaltlicher Zusammenhang bzw. Softwareumgebung verstanden, in der sich der Benutzer während der jeweiligen Systemnutzung befindet.

Auf diese Weise wird der Aufwand für den Benutzer des Systems auf ein Minimum beschränkt und trotzdem ein hohes Maß an Sicherheit gewährleistet, da die Gültigkeit der Authentifizierung erlischt, wenn der Benutzer längere Zeit inaktiv war (weil er z.B. den Raum verlassen hat). Bei entsprechender Wahl der Gültigkeitsdauer einer Authentifizierung kann man so dem Benutzer den Aufwand des (expliziten) Widerrufens seiner Authentifizierung ersparen, obwohl diese Möglichkeit natürlich auch zusätzlich besteht.

Jedem Benutzer des Hausnetzwerks ist ein Datensatz zugeordnet, das sogenannte Benutzerprofil, welches die Präferenzen des Benutzers enthält. Die für die Authentifizierung notwendigen Daten können ebenfalls im Benutzerprofil oder in einer Datenbank enthalten sein oder direkt von den Geräten zur Authentifizierung verwaltet werden. Das Benutzerprofil wird nach der Installation und vor der Benutzung des System erstellt und kann jederzeit unter Berücksichtigung der geltenden Zugriffsrechte auf zugriffgeschützte Objekte verändert werden.

Beginnt ein Benutzer mit dem Zugriff auf das System, muss er sich nicht zu Beginn der Systemnutzung authentifizieren. Falls jedoch der Benutzer seine persönlichen Einstellungen und Zugriffsrechte von Anfang an wirksam haben möchte, muss er sich zu Beginn der Systemnutzung authentifizieren, d.h. die entsprechenden Funktionen des Systems zur Authentifizierung aufrufen.

Wenn der Benutzer sich nicht bereits zu Beginn der Systemnutzung authentifiziert, kann er das System lediglich in nichtpersonalisierter Weise nutzen. Die nichtpersonalisierte Weise kann bedeuten, dass dem Benutzer eine Liste seiner bevorzugten Anwendungen nicht angezeigt werden kann und auch die Voreinstellungen für Anwendungen oder Geräte nicht berücksichtigt werden können. Greift der Benutzer auf ein zugriffgeschützes Objekt des Systems zu, wird er aufgefordert, sich durch z.B. Eingabe Benutzername und Kennwort, Sprechen einer vorgegebenen Wortfolge oder Fingerabdruck zu authentifizieren. Die Authentifizierung wird von einer als Authentifikationsmanager bezeichneten Softwarekomponente des Systems in Zusammenarbeit mit einem Authentifizierungsgerät durchgeführt. Das Authentifizierungsgerät kann z.B. ein Gerät zur Spracherkennung, eine mit entsprechenden Sensoren ausgestattete Vorrichtung zur Erkennung eines Fingerabdrucks, Kamera und andere Geräte sein.

Bestimmte Grunddienste wie z.B. Fernsehen werden auch im nicht autorisierten Modus verfügbar sein, obwohl vielleicht z.B. einzelne Fernsehkanäle nicht aufgerufen werden können (die z.B. die Kinder nicht sehen sollen). Eine Nutzung des Systems ist auch im nicht autorisierten Modus möglich, so dass z.B. auch dem System nicht zuvor bekannte Benutzer Grunddienste des Systems nutzen können.

War die Authentifizierung des Benutzers erfolgreich und die Identität des Benutzers hat sich innerhalb des Systems durch einen Vergleich der vom Benutzer eingegebenen Daten und der im System gespeicherten Daten des Benutzers bewahrheitet, werden die

Zugriffsrechte des Benutzers mit Hilfe von anderen Softwarekomponenten überprüft und entsprechend der Zugriff gewährt oder verwehrt.

Bei erfolgreicher Authentifizierung muss sich der Benutzer innerhalb des Gültigkeitsintervalls der Authentifizierung bei weiteren Zugriffen auf zugriffsgeschützte Objekte des Systems nicht erneut authentifizieren. Falls die Authentifizierung nicht erfolgreich war, kann der Benutzer weiterhin in eingeschränkter Weise (nicht personalisiert, kein Zugriff auf geschützte Objekte) das System benutzen.

Die Gültigkeitsdauer der Authentifizierung ist abhängig von der Zeitdauer der Nutzung und von dem Kontext, in dem der Benutzer das System nutzt. Bei der Gültigkeitsdauer der Authentifizierung wird eine genereller Kontext von einem Anwendungskontext unterschieden. Der generelle Kontext bezieht sich auf Aktionen an der Benutzerschnittstelle des Systems, z B. das Starten von Anwendungs- oder Managementprogrammen. Als Anwendungskontext wird der Kontext bezeichnet, in dem Aktionen innerhalb einer bestimmten Anwendung stattfinden, zB. ein Kanalwechsel während des Femsehens oder das Aufnehmen (Löschen, Abspielen) eines Audio Tagebuchs.

Beginnt der Benutzer innerhalb des Systems einen Zugriff auf ein zugriffsgeschütztes Objekt, wird von ihm die Authentifizierung verlangt. War die Authentifizierung erfolgreich, besitzt sie eine Gültigkeit sowohl für den generellen Kontext wie auch für den Anwendungskontext, dh der Benutzer kann alle Aktivitäten ausführen, die für diesen Benutzer erlaubt sind.

Ein Timer dient als Schaltuhr zur Lieferung von Zeitinformationen innerhalb des Systems. Zum Zeitpunkt der Authentifizierung wird der Timer gestartet, der bei jeder neuen Interaktion des Benutzers mit dem System zurückgesetzt wird. Die Gültigkeit der Authentifizierung bleibt weiterhin erhalten.

Im Falle, dass während der vordefinierten Laufzeit des Timers keine weitere Interaktion des Benutzers stattfindet, erlischt die Authentifizierung für den generellen Kontext, sobald die Laufzeit des Timers ihren Grenzwert erreicht hat. Für den Anwendungskontext bleibt die Authentifizierung erhalten, so dass der Benutzer innerhalb der Anwendung weiterhin alle Aktionen ausführen kann, für die er Zugriffsrechte erhalten hat. Im generellen Kontext kann er nun lediglich Aktionen ausführen, die für nicht autorisierte Benutzer vorgesehen sind, bzw. der Benutzer müsste eine erneute Authentifizierung ausführen.

Die Laufzeit des Timers, also das Zeitintervall, in dem die Authentifizierung bei Inaktivität des Benutzers gültig bleibt, ist abhängig von der verwendeten Authentifizierungsmethode. Wird das System über Spracheingabe gesteuert, kann die Eingabe gleichzeitig zur Sprecheridentifizierung verwendet und damit die Laufzeit des Timers auf ein Minimum reduziert werden, da bei jeder Eingabe zur Steuerung die Authentifizierung mit jedem gesprochenen Wort mitgeliefert wird bei entsprechenden Eigenschaften der Spracherkennung.

Zusätzlich zum Erlöschen der Authentifizierung nach Ablauf des Timers, besteht für den Benutzer die Möglichkeit seine Authentifizierung ausdrücklich (explizit) zu widerrufen.

Die Authentifizierung kann explizit durch das System (zB. bei Zugriffsversuch auf ein geschütztes Objekt) bzw. den Benutzer (z.B. durch das Auflegen seines Fingers auf einen Fingerprint Sensor) veranlasst werden oder den Benutzer unbemerkt (implizit) während einer Eingabe des Benutzers statt finden. Eine implizite Authentifizierung kann z.B. durch eine Kamera mit Gesichtserkennung oder durch die Spracherkennung bei der Eingabe eines Sprachkommandos ausgelöst werden.

Ein Verfahren zur Authentifizierung eines Benutzers innerhalb eines Netzwerks mit Netzwerkknoten und einem auf den Netzwerkknoten verteiltem Softwaresystem, setzt beim ersten Zugriff auf ein zugriffsgeschütztes Objekt des Systems eine Authentifizierung eines Benutzers voraus, wobei eine Gültigkeitsdauer der Authentifizierung abhängig von der Zeitdauer des Zugriffes auf das zugriffsgeschützte Objekt und vom Kontext der Systemnutzung ist.

Ein Ausführungsbeispiel der Erfindung wird nachstehend anhand der Figuren näher erläutert. Es zeigen:
- Fig. 1: ein Netzwerk mit verschiedenen Terminals,
- Fig. 2Abis2C: eine Darstellung der unterschiedlichen Authentifizierungsstrategien in der Zeit
- Fig 3: die während des Authentifizierungsvorgangs relevanten Softwarekomponenten

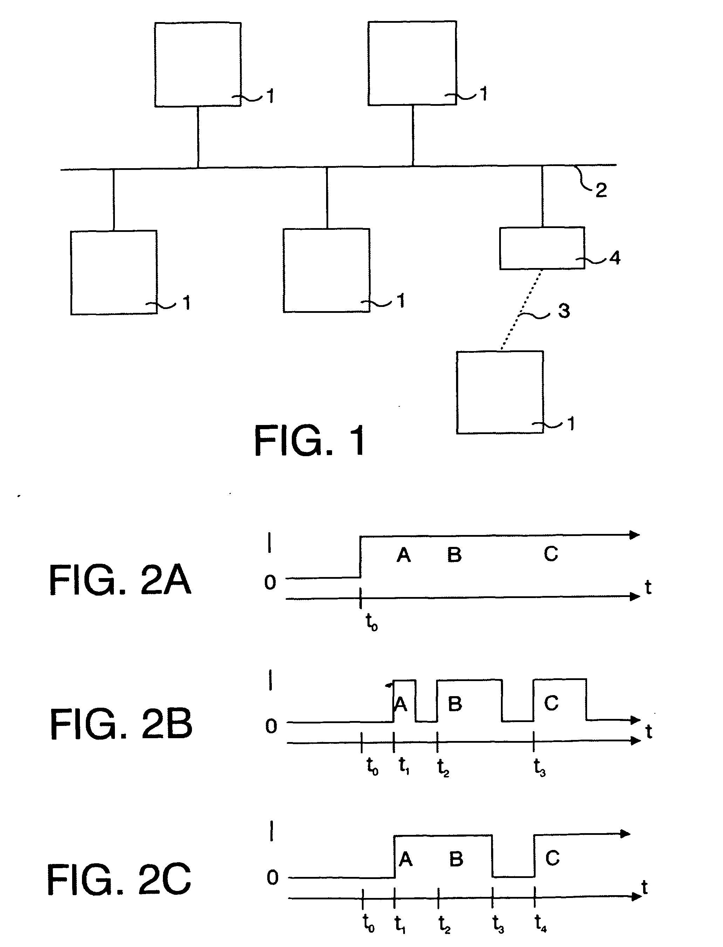

Fig. 1 zeigt ein Hausnetzwerk, welches verschiedene Terminals 1 über ein Bussystem 2 miteinander koppelt. Die Terminals 1 können auch über eine drahtlose Verbindung 3 und eine Sende-/Empfangsstation 4 mit dem Bussystem 2 gekoppelt werden. Hierbei können zB. Infrarot- oder Funkverbindungen verwendet werden. Solche Terminals können PCs und Geräte der Unterhaltungselektronik, wie z.B. Fernsehgerät, Set-Top-Box, Tuner, Kamera, digitaler Videorecorder, CD-Spieler sein.

Ein Benutzer startet an einem Terminal 1 mit Hilfe eines auf allen Terminals 1 enthaltenen, verteilten Softwaresystems eine gewünschte Anwendung im Hausnetzwerk. Angenommen der Benutzer möchte einen Eintrag in sein Audio Tagebuch machen. Damit beginnt durch den Benutzer eine Nutzung eines System, das aus Software- und Hardwarekomponenten des Hausnetzwerks gebildet wrd, für welches der Benutzer seine persönliche Voreinstellung verwenden möchte. Da nicht jeder Hausbewohner einen Zugriff auf die persönlichen Daten des Audio Tagebuchs dieses Benutzers hat, muss die Identität des Benutzer innerhalb des System verifiziert werden (Authentifizierung).

Fig. 2Abis 2C bestehen aus drei Diagrammen, die unterschiedliche Authentifizierungsstrategien innerhalb des Hausnetzwerks darstellen. In dieser beispielhaften Darstellung bedeutet die Größe 0, dass der Benutzer innerhalb des Systems nicht authentifiziert ist d.h. die Identität des Benutzer hat sich durch die verfügbare Authentifizierungsmethode wie z.B. Sprechen einer vorgegebenen Wortfolge nicht bewahrheitet. Die Größe lsymbolisiert die erfolgreiche Authentifizierung des Benutzers innerhalb des Systems. Bei der Zeit t₀ beginnt der Benutzer das System zu nutzen. Zum Zeitpunkt t₁ greift der Benutzer auf ein zugriffsgeschütztes Objekt A zu und muss sich infolgedessen innerhalb des Systems authentifizieren. Während seiner Systemnutzungsdauer greift der Benutzer wiederholt auf zugriffsgeschützte Objekte B und C zu, die ebenfalls eine Überprüfung seiner Identität verlangen, da sie vor unerlaubtem Zugriff eines Benutzer oder einer Benutzergruppe geschützt sind.

In Fig 2Awird die Authentifizierung zu Beginn der Systemnutzung des Benutzers verlangt und bleibt bis zum Ende der Nutzung des Benutzers bestehen, falls der Benutzer diese nicht ausdrücklich widerruft.

Die in Fig. 2B vorgestellte Authentifizierungsstrategie verlangt eine Authentifizierung zum Zeitpunkt des Zugriffes (t₁) auf ein zugriffsgeschütztes Objekt A und erlischt am Ende des Zugriffes auf dieses Objekt. Bei einem weiteren Zugriff zu einem späteren Zeitpunkt t₂ auf ein Objekt B, das ebenfalls zugriffgeschützt ist, muss sich der Benutzer erneut authentifizieren. Diese Authentifizierung verliert seine Gültigkeit, nachdem der Zugriff auf das Objekt B beendet wurde, so dass bei einem späterem Zugriff (t₃) auf ein Objekt C der Benutzer das dritte Mal während seiner Systemnutzung zur Authentifizierung aufgefordert wird.

In Fig 2C wird eine Authentifizierungsstrategie dargestellt, die dem Benutzer den Authentifizierungsaufwand auf ein Minimum reduziert. Die Authentifizierung wird nicht zu Beginn der Systemnutzung verlangt, sondern wie in Fig. 2B beim ersten Zugriff (t₁) auf ein zugriffsgeschütztes Objekt A. Im Gegensatz zu dem in Fig 2B vorgestellten Verfahren erlischt die Gültigkeit der Authentifizierung des Benutzers nicht nach dem Ende des Zugriffs, sondern bleibt bis zum nächsten Zugriff des Benutzers auf ein zugriffsgeschütztes Objekt B zum Zeitpunkt t₂ bestehen.

Macht der Benutzer nach dem Zugriff auf das zugriffsgeschütztes Objekt B während des Gültigkeitsintervalls der Authentifizierung keine weiteren Zugriffe oder Interaktionen, dann verliert die Authentifizierung ihre Gültigkeit zum Zeitpunkt t₃. Falls der Benutzer zu einem späteren Zeitpunkt t₄ auf ein zugriffsgeschütztes Objekt C (neue Anwendung) zugreifen möchte, muss er sich erneut authentifizieren.

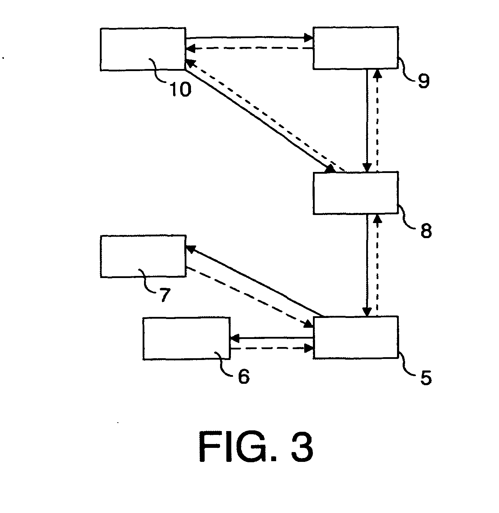

Fig. 3 zeigt die für die Ausführung der Authentifizierung relevanten Softwarekomponenten. Speziell für die Durchrührung der Authentifizierung sind ein Authentifizierungsmanager 5, ein Authentifizierungsfunktionsmodul 6, welches das physikalische Authentifizierungsgerät softwaremaßig repräsentiert und eine Datenbank 7, in der die Authentifizierungsdaten für die einzelnen Benutzer abgelegt sind, von Bedeutung. Eine als Zugiffsrechtemanager 8 bezeichnete Softwarekomponente, die Zugriffsrechte des Benutzers auf das gewünschte Objekt überprüft, eine als Ressourcenmanager 9 bezeichnete Softwarekomponente, welche Ressourcen wie Geräte, Inhalte, Nutzdaten, Verwaltungsdaten, Anwendungen verwaltet und eine Benutzerschnittstelle 10 sind als weitere Softwarekomponenten des Systems zur anschaulichen Darstellung eines Authentifizierungsvorgangs notwendig.

Bei einem Zugriff des Benutzers auf eine Anwendung kann die Benutzerschnittstelle 10 direkt bei dem Zugriffsrechtemanager 8 überprüfen, ob dieser Zugriff des Benutzers erlaubt ist. Ist die Nutzung der Anwendung erlaubt fordert sie als nächstes die Reservienmg der für diese Anwendung notwendigen Ressourcen bei dem Ressourcenmanager 9 an. Dieser wiederum veranlasst die Überprüfung der Zugriffsrechte beim Zugriffsrechtemanager 8, um zu bestimmen ob er auf zugriffsgeschützte Objekte des Systems zugreifen muss. Ist dies der Fall fordert der Zugriffsrechtemanagers 8 eine Authentifizierung des Benutzers beim Authentifizierungsmanager 5 an. Anstelle des Zugriffsrechtemanager 8 kann jede beliebige Komponente des Systems eine Authentifizierung beim Authentifizierungsmanager 5 anfordern.

Nachdem eine entsprechende Anfrage den Authentifizierungsmanager 5 erreicht hat, selektiert und reserviert er die möglichen Authentifizierungsgeräte, die über entsprechende Authentifizierungsfunktionsmodule repräsentiert werden und fordert sie auf mit der Authentifizierung zu beginnen. Eine Aufforderung zur Authentifizierung wird auf dem Bildschirm angezeigt oder durch einen Lautsprecher ausgegeben. Sobald dem Authentifizierungsfunktionsmodul durch den Benutzer am Authentifizierungsgerät eingegebene Authentifizierungsdaten vorliegen, fordert der Authentifizierungsmanager 5 Vergleichsdaten aus der Datenbank 7 zum Vergleich an. Eine Vergleichoperation der Daten wird ausgeführt und das Resultat ist entweder die Identifikation des Benutzers oder die Authentifizierung war nicht erfolgreich. Falls die Authentifizierung erfolgreich war, wird eine als Timer bezeichnete Softwarekomponente als Schaltuhr zur Messung der Zeit zwischen zwei Interaktionen des Benutzers mit dem System gestartet, damit die Authentifizierung nach Ablauf der Gültigkeitsintervalls widerrufen werden kann.

## Patentansprüche

1. Netzwerk mit Netzwerkknoten (1) und einem auf den Netzwerkknoten (1) verteiltem Softwaresystem, innerhalb dessen beim ersten Zugriff auf ein zugriffsgeschütztes Objekt (A, B, C) des Systems eine Authentifizierung eines Benutzers vorgesehen ist, die für wenigstens einen weiteren Zugriff auf ein zugriffsgeschütztes Objekt gültig ist und eine Gültigkeitsdauer der Authentifizierung abhängig ist von der Zeitdauer des Zugriffs auf das zugriffsgeschützte Objekt und der Softwareumgebung, in der sich der Benutzer innerhalb der Systems befindet,
**dadurch gekennzeichnet,**
**dass** eine als Timer bezeichnete Softwarekomponente nach der Authentifizierung zur Zeiterfassung der Systemnutzung des Benutzers gestartet wird,
**dass** der Timer bei jeder neuen Interaktion des Benutzers mit dem System zurückgesetzt wird und
**dass** die Gültigkeit der Authentifizierung für die Aktionen an der Benutzerschnittstelle (10) nach Ablauf einer Laufzeit des Timers erlischt.

2. Netzwerk nach Anspruch 1
**dadurch gekennzeichnet,**
**dass** beim Zugriff auf ein zugriffsgeschütztes Objekt (A, B, C) ein Authentifizierungsmanager (5) und ein Authentifizierungsgerät zur Authentifizierung des Benutzers vorgesehen sind.

3. Netzwerk nach Anspruch 2
**dadurch gekennzeichnet,**
**dass** nach einer erfolgreichen Authentifizierung eine Systemnutzung des Benutzers innerhalb eines generellen Kontexts, der Aktionen an der Benutzerschnittstelle (10) des Systems erlaubt, als auch innerhalb eines Anwendungskontexts, der Aktionen innerhalb einer Anwendung erlaubt, vorgesehen sind.

4. Netzwerk nach Anspruch 3
**dadurch gekennzeichnet,**
**dass** der Laufzeit des Timers bei Installation des Systems ein beliebiger Wert zugewiesen werden kann.

5. Netzwerk nach Anspruch 4
**dadurch gekennzeichnet,**
**dass** eine explizite Authentifizierung, die durch das System oder die Benutzer veranlasst wird, oder eine implizite Authentifizierung während einer Interaktion des Benutzer mit dem System vorgesehen ist.

6. Netzwerk nach Anspruch 1
**dadurch gekennzeichnet,**
**dass** das Netzwerk insbesondere ein Hausnetzwerk nach dem HAVi Standard ist.

7. Verfahren zur Authentifizierung eines Benutzers innerhalb eines Netzwerks mit Netzwerkknoten (1) und einem auf den Netzwerkknoten (1) verteiltem Softwaresystem, innerhalb dessen beim ersten Zugriff auf ein zugriffsgeschütztes Objekt (A, B, C) des Systems eine Authentifizierung eines Benutzers vorgesehen ist, wobei eine Gültigkeitsdauer der Authentifizierung abhängig ist von der Zeitdauer des Zugriffs auf das zugriffsgeschützte Objekt und einer Softwareumgebung, in der sich der Benutzer innerhalb der Systems befindet,
**dadurch gekennzeichnet,**
**dass** eine als Timer bezeichnete Softwarekomponente nach der Authentifizierung zur Zeiterfassung der Systemnutzung des Benutzers gestartet wird,
**dass** der Timer bei jeder neuen Interaktion des Benutzers mit dem System zurückgesetzt wird und
**dass** die Gültigkeit der Authentifizierung für die Aktionen an der Benutzerschnittstelle (10) nach Ablauf einer Laufzeit des Timers erlischt.

## Claims

1. A network with network nodes (1) and a software system distributed over the network nodes (1) within which network, on first access to an access-protected object (A, B, C) of the system an authentication of a user is provided, which is valid for at least a further access to an access-protected object and a duration of the validity of authentication is dependent on the duration of access to the access-protected object and the software environment in which the user is situated within the system, **characterized in that** a software component referred to as timer is started subsequent to the authentication to detect the time of use of the system-by the user and that with each new interaction between the user and the system the timer is reset and that the validity of the authentication for the actions on the user interface (10) expires after a delay of the timer has elapsed.

2. A network as claimed in claim 1, **characterized in that** on access to an access-protected object (A,B,C), an authentication manager (5) and an authentication device are provided to authenticate the user.

3. A network as claimed in claim 2, **characterized in that** after successful authentication, system use by the user is provided within a general context, which allows actions at the system user interface (10) and also within an application context, which allows actions within an application.

4. A network as claimed in claim 3, **characterized in that** the delay of the timer can be assigned an arbitrary value on installation of the system.

5. A network as claimed in claim 4, **characterized in that** there is an explicit authentication arranged for by the system or the user, or an implicit authentication during a user interaction with the system.

6. A network as claimed in claim 1, **characterized in that** the network is in particular a home network according to the HAVi standard.

7. A method of authentication of a user within a network with network nodes (1) and a software system distributed over the network nodes (1) within which network, on first access to an access-protected object (A, B, C) of the system an authentication of a user is provided, which is valid for at least a further access to the access-protected object and a duration of the validity of authentication is dependent on the duration of access to the access-protected object and a software environment in which the user is situated within the system, **characterized in that** a software component referred to as timer is started subsequent to the authentication to detect the time of use of the system by the user and that with each new interaction between the user and the system the timer is reset and that the validity of the authentication for the actions on the user interface (10) expires after a delay of the timer has elapsed.

## Revendications

1. Réseau avec des noeuds de réseau (1) et un système logiciel distribué sur les noeuds de réseau (1) dans lequel il est prévu au premier accès à un objet à l'accès protégé (A, B, C) du système une authentification d'un utilisateur qui est valable pour au moins un accès supplémentaire à un objet à l'accès protégé et une durée de validité de l'authentification dépend de la durée de l'accès à l'objet à l'accès protégé et de l'environnement logiciel dans lequel se trouve l'utilisateur dans le système,
**caractérisé en ce**
**qu'**un composant logiciel appelé temporisateur est démarré après l'authentification pour l'enregistrement du temps de l'utilisation du système par l'utilisateur,
**que** le temporisateur est réinitialisé à chaque nouvelle interaction de l'utilisateur avec le système et
**que** la validité de l'authentification expire pour les actions à l'interface utilisateur (10) après l'écoulement du temps d'exécution du temporisateur.

2. Réseau selon la revendication 1,
**caractérisé en ce**
**qu'**en cas d'accès à un objet (A, B, C) à l'accès protégé, un gestionnaire d'authentification (5) et un appareil d'authentification sont prévus pour l'authentification de l'utilisateur.

3. Réseau selon la revendication 2,
**caractérisé en ce**
**qu'**après une authentification réussie, il est prévu une utilisation du système par l'utilisateur dans un contexte général qui autorise des actions à l'interface utilisateur (10) du système ainsi que dans un contexte d'application qui autorise des actions dans une application.

4. Réseau selon la revendication 3,
**caractérisé en ce**
**qu'**une valeur quelconque peut être attribuée au temps d'exécution du temporisateur lors de l'installation du système.

5. Réseau selon la revendication 4,
**caractérisé en ce**
**qu'**il est prévu une authentification explicite qui est provoquée par le système ou l'utilisateur ou une authentification implicite pendant une interaction de l'utilisateur avec le système.

6. Réseau selon la revendication 1,
**caractérisé en ce**
**que** le réseau est en particulier un réseau domotique selon la norme HAVi.

7. Procédé d'authentification d'un utilisateur dans un réseau avec des noeuds de réseau (1) et un système logiciel distribué sur les noeuds de réseau (1) dans lequel il est prévu au premier accès à un objet à l'accès protégé (A, B, C) du système une authentification d'un utilisateur, une durée de validité de l'authentification dépendant de la durée de l'accès à l'objet à l'accès protégé et de l'environnement logiciel dans lequel se trouve l'utilisateur dans le système,
**caractérisé en ce**
**qu'**un composant logiciel-appelé temporisateur est démarré après l'authentification pour l'enregistrement du temps de l'utilisation du système par l'utilisateur,
**que** le temporisateur est réinitialisé à chaque nouvelle interaction de l'utilisateur avec le système et
**que** la validité de l'authentification expire pour les actions à l'interface utilisateur (10) après l'écoulement du temps d'exécution du temporisateur.
